# EUROPEAN PATENT APPLICATION

(11) **EP 3 705 389 A1**
(43) Date of publication of application: **09.09.2020**
(21) Application number: 18903737.7
(22) Date of filing: 28.11.2018
(51) Int. Cl.: B62K 19/38

(54) **SADDLED VEHICLE**

(30) Priority: 05.02.2018 IN 201811004281
(71) Applicant: HONDA MOTOR CO., LTD., Minato-ku Tokyo 107-8556 (JP)
(72) Inventor: KANAI Yuki, Wako-shi, Saitama 351-0193 (JP); MINAMI Hiroki, Wako-shi, Saitama 351-0193 (JP); HAYASHI Tsunemori, Wako-shi, Saitama 351-0193 (JP); TODA Makoto, Wako-shi, Saitama 351-0193 (JP); KAUL Deepak, Gurgaon, Haryana 122050 (IN); AGARWAL Ashish, Gurgaon, Haryana 122050 (IN)
(74) Representative: Herzog, Markus
(86) International application number: PCT/JP2018/043709
(87) International publication number: WO 2019/150730

(57) **Abstract**

In a saddled vehicle including a head pipe 17, bridges 72 and 73 pivotally supported by the head pipe 17 to hold front forks 14, a headlight 41 connected to the bridges 72 and 73 via a stay 80, a headlight cover 44 that covers the rear of the headlight 41, and a braking force adjusting device 100 that adjusts a braking force applied to a front wheel 2 rotatably supported by the front forks 14, the braking force adjusting device 100 is connected to the stay 80.

## Description

### BACKGROUND OF THE INVENTION

### Field of the Invention

The present invention relates to a saddled vehicle.

### Description of the Related Art

Japanese Patent Application Laid-Open No. 2016-182838 (Patent Literature 1) discloses a braking force adjusting device disposed to the rear of a head pipe. The side of the braking force adjusting device is covered with a cover. However, the front of the braking force adjusting device is exposed. A brake hose extends from the rear of the head pipe to a wheel side below a brake lever of a handlebar and a front fork.

In the technique described in Patent Literature 1, since the front of the braking force adjusting device is exposed, the braking force adjusting device is seen from the outside. The brake hose extends from the rear of the head pipe to a steering system operated by the handlebar.

### SUMMARY OF THE INVENTION

The present invention has been devised in view of the circumstances, and an object of the present invention is to provide a saddled vehicle with improved external appearance through a reduction of exposure of a braking force adjusting device and improved operability of a handlebar.

This specification includes all the contents of Indian Patent Application No. 201811004281 filed on February 5, 2018.

The present invention provides a saddled vehicle including: a head pipe (17); bridges (72, 73) pivotally supported by the head pipe (17) to hold front forks (14); a headlight (41) connected to the bridges (72, 73) via a stay (80); a headlight cover (44) that covers a rear of the headlight (41); and a braking force adjusting device (100) that adjusts a braking force applied to a wheel (2) rotatably supported by the front forks (14). The braking force adjusting device (100) is connected to the stay (80) .

In the invention, the braking force adjusting device (100) may include: a front-wheel-side braking force output terminal (104) that applies a braking force to a front wheel (2); and a rear-wheel-side braking force output terminal (105) that applies a braking force to a rear wheel (3). The rear-wheel-side braking force output terminal (105) may be disposed in a position closer to the head pipe (17) than the front-wheel-side braking force output terminal (104).

In the invention, a hose (98) extending from the rear-wheel-side braking force output terminal (105) to a rear wheel (3) may be routed to one side in a vehicle width direction of a main frame (18) extending backward from the head pipe (17). The braking force adjusting device (100) may be set on one side in the vehicle width direction with respect to the stay (80).

In the invention, the braking force adjusting device (100) may be disposed near an upper part of the head pipe (17) .

In the invention, the saddled vehicle may include a meter device (43) behind and above the headlight (41) and above the braking force adjusting device (100).

In the invention, the braking force adjusting device (100) may be disposed between a pair of the front forks (14) .

With the saddled vehicle of the present invention, in the saddled vehicle including a head pipe, bridges pivotally supported by the head pipe to hold front forks, a headlight connected to the bridges via a stay, a headlight cover that covers a rear of the headlight, and a braking force adjusting device that adjusts a braking force applied to a wheel rotatably supported by the front forks, the braking force adjusting device being connected to the stay. With this configuration, since the braking force adjusting device is covered with the headlight cover behind the headlight. Therefore, it is possible to prevent exposure of the braking force adjusting device without separately providing a cover for protection. By providing the braking force adjusting device on a movable side (in a steering system), it is possible to reduce the influence of steering on the hose connected to the handlebar and the front wheel.

In the invention, the braking force adjusting device may include: a front-wheel-side braking force output terminal that applies a braking force to a front wheel; and a rear-wheel-side braking force output terminal that applies a braking force to a rear wheel. The rear-wheel-side braking force output terminal may be disposed in a position closer to the head pipe than the front-wheel-side braking force output terminal. With this configuration, by disposing the rear-wheel-side braking force output terminal in a position close to the rotation center, it is possible to reduce the influence of steering.

In the invention, a hose extending from the rear-wheel-side braking force output terminal to the rear wheel may be routed to one side in a vehicle width direction of a main frame extending backward from the head pipe. The braking force adjusting device may be set on one side in the vehicle width direction with respect to the stay. With this configuration, laying of the hose from the braking force adjusting device to the main frame is improved.

In the invention, the braking force adjusting device may be disposed near an upper part of the head pipe. With this configuration, it is possible to secure a large curvature radius of bending of a rear hose guided to extend along a frame.

In the invention, the saddled vehicle may include a meter device behind and above the headlight and above the braking force adjusting device. With this configuration, it is possible to protect the braking force adjusting device from above.

In the invention, the braking force adjusting device may be disposed between a pair of the front forks. With this configuration, it is possible to achieve improvement of antitheft properties concerning the braking force adjusting device.

### BRIEF DESCRIPTION OF THE DRAWINGS

FIG. 1 is a left side view of a saddled vehicle according to an embodiment of the present invention;
FIG. 2 is a left side view of a main part of the saddled vehicle;
FIG. 3 is a front view of the main part of the saddled vehicle;
FIG. 4 is a partial sectional view of a CBS module;
FIG. 5 is an explanatory diagram of the CBS module and a stay in a steering system and is a view of the CBS module and the stay viewed from a front side orthogonal to a front fork;
FIG. 6 is an explanatory diagram of the CBS module and the stay in the steering system and is a view of the CBS module and the stay viewed further from the left side than a front fork on the left side;
FIG. 7 is a top view of the main part of the saddled vehicle;
FIG. 8 is a VIII-VIII line sectional view of FIG. 1; and
FIG. 9 is a sectional view of the main part of the saddled vehicle and is a sectional view of the right side viewed further from the left side than a head pipe.

### DETAILED DESCRIPTION OF THE PREFERRED EMBODIMENTS

An embodiment of the present invention is explained below with reference to the drawings. Note that, in the explanation, directions such as front and rear, left and right, and upward and downward in the explanation are assumed to be the same as directions with respect to a vehicle body unless specifically described otherwise. A sign FR shown in the figures indicates a vehicle body front direction. A sign UP indicates a vehicle body upward direction. A sign LH indicates a vehicle body left direction.

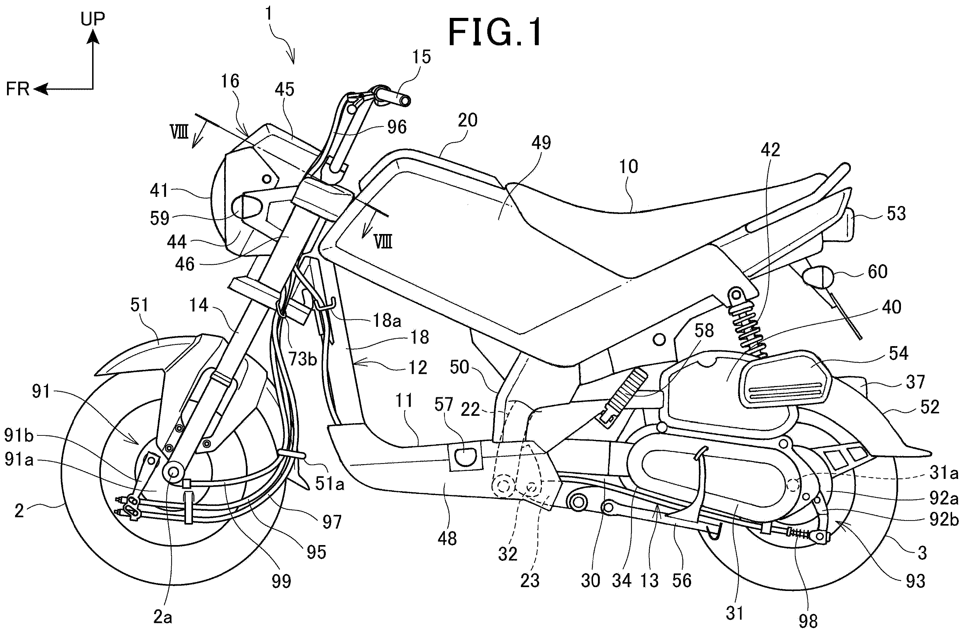

FIG. 1 is a left side view of a saddled vehicle 1 according to the embodiment of the present invention.

The saddled vehicle 1 is a vehicle on which a rider rides while straddling on a seat 10. The saddled vehicle 1 is a motorcycle including a low floor 11. The saddled vehicle 1 includes a front wheel 2 in the front of an under-bone type vehicle body frame 12. A rear wheel 3, which is a driving wheel, is axially supported by a unit swing engine 13 disposed in a vehicle rear part.

The saddled vehicle 1 includes front forks 14 axially supported at a front end portion of the vehicle body frame 12. The front wheel 2 is axially supported at lower end portions of the front forks 14. A handlebar 15 steered by the rider is attached to the upper ends of the front forks 14.

The saddled vehicle 1 includes a vehicle body cover 16 that covers a vehicle body such as a vehicle body frame 12.

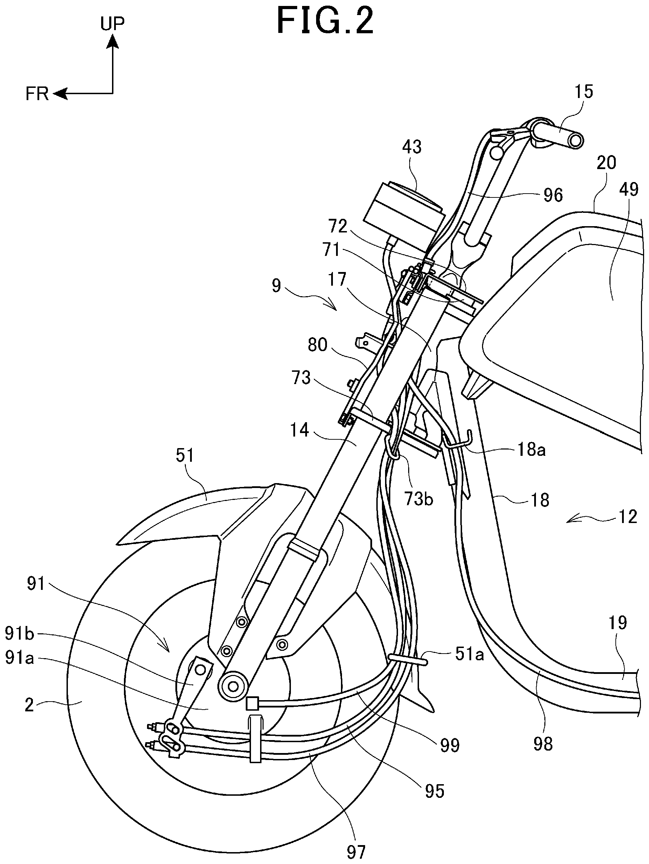

FIG. 2 is a left side view of a main part of the saddled vehicle 1. In FIG. 2, illustration of the vehicle body cover 16 and the like in the front is omitted.

The vehicle body frame 12 includes a head pipe 17 provided at the front end, a main frame 18 extending rear downward from the head pipe 17, a pair of left and right lower frames 19 extending substantially horizontally backward from the lower end of the main frame 18, and a pair of left and right seat frames 22 (see FIG. 1) extending rear upward from the rear ends of the lower frames 19.

A fuel tank 20 is disposed behind the head pipe 17 and in the front of the seat 10. The fuel tank 20 is supported by frames (not shown in FIG. 1) extending forward from an upper part of the seat frames 22 (not shown in FIG. 1).

As shown in FIG. 1, the unit swing engine 13 is a unit swing power unit in which an engine 30, which is an internal combustion engine, and an arm section 31, which supports the rear wheel 3, are integrated. A belt-type continuously variable transmission (not shown in FIG. 1), which transmits an output of the engine 30 to the rear wheel 3, is housed on the inside of the arm section 31 formed in a hollow case shape.

The arm section 31 extends backward from a left rear part of a crank case 34 of the engine 30 and is located on the left side of the rear wheel 3. The rear wheel 3 is axially supported by a rear wheel axle 31a at the rear end portion of the arm section 31 and is cantilevered by the arm section 31.

In the unit swing engine 13, a lower part of the crank case 34 is swingably supported by a pivot shaft 32 of the vehicle body frame 12 via a link 23.

A rear suspension 42, which attenuates swing of the unit swing engine 13, is laid between the arm section 31 and the upper part of the seat frames 22 (not shown in FIG. 1) in the rear part of the vehicle body frame 12.

An intake device of the engine 30 includes an air cleaner box 40 and a throttle body (not shown in FIG. 1) connected to downstream of the air cleaner box 40.

The air cleaner box 40 is supported by the arm section 31 and located above the arm section 31.

An exhaust pipe (not shown in FIG. 1) of the engine 30 is connected to a muffler 37 disposed on the right side of the rear wheel 3.

The vehicle body cover 16 includes a headlight cover 44 that covers a headlight 41, a meter cover 45 that covers a meter device 43 (see FIG. 2), and a front cover 46 that covers the head pipe 17, a top bridge 72, and a bottom bridge 73 from the front and the side.

The vehicle body cover 16 includes an under cover 48 that covers the lower frames 19 (see FIG. 2) from below, the floor 11 that covers the lower frames 19 from above, a pair of left and right side covers 49 that covers lower parts of the fuel tank 20 and the seat 10 from the sides, and a center lower cover 50 that covers the engine 30 from the front below the seat 10.

Further, the saddled vehicle 1 includes a front fender 51 that covers the front wheel 2 from above and a rear fender 52 that covers the rear wheel 3 from above.

A tail lamp 53 is provided in a rear lower part of the seat 10. A sari guard 54 is provided in a left upper part of the rear wheel 3.

A center stand 56 is attached to a lower part of the crank case 34. The center stand 56 is used to park the saddled vehicle 1 in an upright state. The center stand 56 is supported by the crank case 34 and supported to be capable of pivoting between a housed state and a parking state.

A pair of left and right rider steps 57 is provided on the left and the right of the floor 11. Passenger steps 58 are provided behind and above the rider steps 57. Reference numeral 59 denotes a front winker. Reference numeral 60 denotes a rear winker.

A front wheel brake 91 is provided in the front wheel 2. The front wheel brake 91 is a drum brake and includes a brake panel 91a, a brake arm 91b, and a not-shown brake shoe.

A rear wheel brake 92 is provided in the rear wheel 3. The rear wheel brake 92 is a drum brake and includes a brake panel 92a, a brake arm 92b, and a not-shown brake shoe.

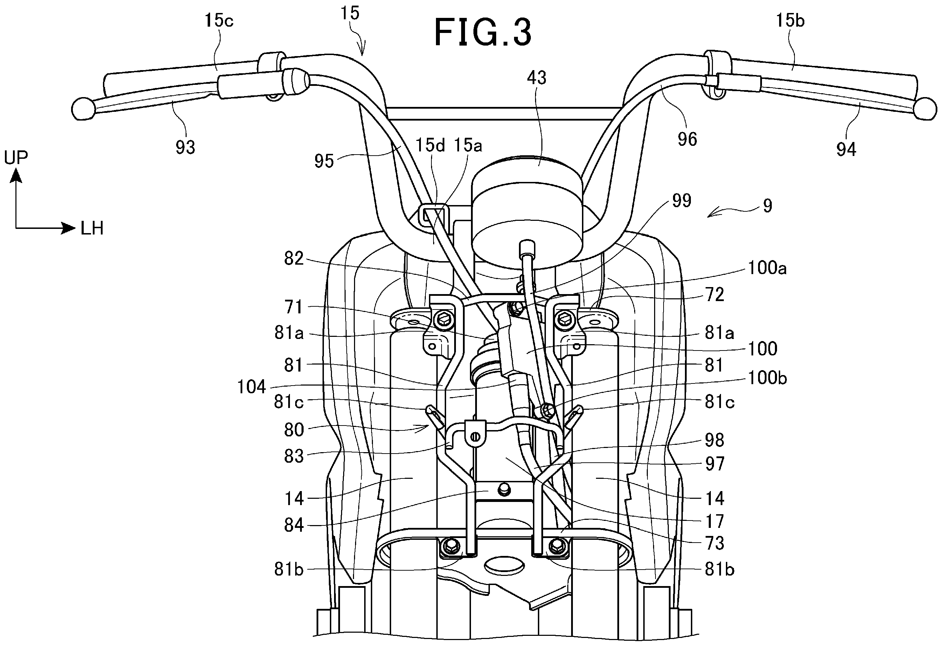

FIG. 3 is a front view of the main part of the saddled vehicle 1. In FIG. 3, illustration of the vehicle body cover 16, the headlight 41, the inner tubes of the front forks 14, and the like in the front is omitted.

A steering system 9 is swingably supported by the head pipe 17. The steering system 9 includes a steering shaft 71, a pair of left and right front forks 14, the top bridge 72, and the bottom bridge 73.

The steering shaft 71 is pivotally supported by the head pipe 17.

The left and right front forks 14 are shock absorbers of a telescopic type disposed on both the left and right sides of the front wheel 2. As shown in FIG. 1, the front wheel (wheel) 2 is rotatably supported by an axle 2a laid between the lower end portions of the left and right front forks 14.

The top bridge 72 is fixed to the upper end portion of the steering shaft 71 and couples upper parts of the left and right front forks 14.

The bottom bridge 73 is fixed to the lower end portion of the steering shaft 71 and couples the left and right front forks 14.

The handlebar 15 is fixed to an upper part of the top bridge 72. The handlebar 15 is formed in a shape obtained by bending a pipe material. The handlebar 15 includes a base 15a fixed to the top bridge 72 and extending in the left-right direction and a pair of left and right handlebar sections 15b and 15c respectively extending upward to the vehicle width direction outer sides from the left and right ends of the base 15a.

A right brake lever 93 is supported by the handlebar section 15c on the right side. A right brake cable 95 extending toward the front wheel brake 91 is connected to the right brake lever 93.

A left brake lever 94 is supported by the handlebar section 15b on the left side. A left brake cable 96 extending toward a CBS (Combined Brake System) module (a braking force adjusting device) 100 is connected to the left brake lever 94.

The left brake cable 96 is connected to an upper part of the CBS module 100. A front interlocking brake cable 97 extending toward the front wheel brake 91 and a rear interlocking brake cable (rear hose) 98 extending toward the rear wheel brake 92 are connected to a lower part of the CBS module 100.

The brake cables (hoses) 95 to 98 are wire-type cables. Inner cables of the brake cables (the hoses) 95 to 98 are towed, whereby operation forces of the right brake lever 93 and the left brake lever 94 are transmitted to the front wheel brake 91 and the rear wheel brake 92.

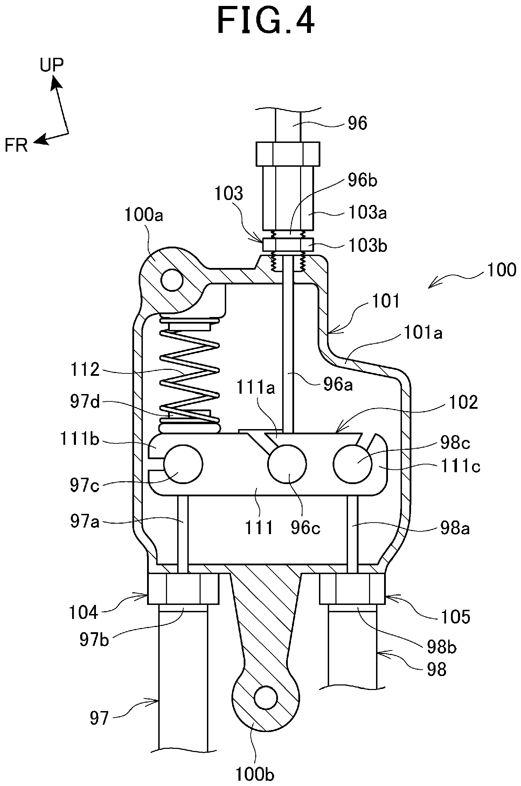

FIG. 4 is a partial sectional view of the CBS module 100.

The saddled vehicle 1 includes the CBS module 100 that causes both of the front wheel brake 91 and the rear wheel brake 92 to interlock and operate when the left brake lever 94 functioning as a rear wheel brake operator is operated.

The left brake cable 96, the front interlocking brake cable 97, and the rear interlocking brake cable 98 are connected to the CBS module 100. The brake cables (the hoses) 96, 97, and 98 have cable structures obtained by covering the circumferences of inner cables 96a, 97a, and 98a with outer cables 96b, 97b, and 98b. Note that the right brake cable 95 not shown in FIG. 4 also has a cable structure obtained by covering the circumference of an inner cable with an outer cable.

The CBS module 100 includes an equalizer box 101. The equalizer box 101 is formed in a rectangular parallelepiped box shape. An upper fixing section 100a is formed in a front upper part of the equalizer box 101. A lower fixing section 100b extending downward is formed in the lower center of the equalizer box 101. The CBS module 100 is fixed to the steering system 9 by the upper fixing section 100a and the lower fixing section 100b.

An equalizer (a braking force adjusting device main body) 102 is disposed on the inside of the equalizer box 101.

An input connecting section (a braking force input terminal) 103 is provided in an upper part of the equalizer box 101. The left brake cable 96 is connected to the input connecting section 103. The outer cable 96b is fixed by an adjust bolt 103a and a lock nut 103b.

A front wheel output connecting section (a front-wheel-side braking force output terminal) 104 is provided on a lower part front side of the equalizer box 101. The front interlocking brake cable 97 is connected to a front wheel output connecting section 104. The outer cable 97b is fixed to the front wheel output connecting section 104.

A rear wheel output connecting section (a rear-wheel-side braking force output terminal) 105 is provided on a lower part rear side of the equalizer box 101. The rear interlocking brake cable 98 is connected to the rear wheel output connecting section 105. The outer cable 98b is fixed to the rear wheel output connecting section 105.

The equalizer 102 includes an arm 111. The arm 111 extends along the inside of the equalizer box 101. The inner cable 96a of the left brake cable 96 is connected to an intermediate section 111a in the longitudinal direction substantial center of the arm 111. The inner cable 97a of the front interlocking brake cable 97 is connected to a front end portion 111b of the arm 111. The inner cable 98a of the rear interlocking brake cable 98 is connected to a rear end portion 111c of the arm 111. The inner cables 96a, 97a, and 98a are connected via shaft members 96c, 97c, and 98c. The arm 111 is capable of inclining with respect to the inner cables 96a, 97a, and 98a.

A sliding section 97d extending upward is coupled to the shaft member 97c of the front end portion 111b. A spring 112 is disposed above the sliding section 97d. The spring 112 urges the front end portion 111b of the arm 111 downward via the sliding section 97d. A restricting section 101a recessed downward is formed in the equalizer box 101 above the rear end portion 111c of the arm 111. The rear end portion 111c of the arm 111 is capable of coming into contact with the restricting section 101a.

When the left brake lever 94 is operated, the inner cable 96a of the left brake cable 96 is towed upward and the equalizer 102 moves upward. Therefore, the inner cable 97a of the front interlocking brake cable 97 and the inner cable 98a of the rear interlocking brake cable 98 are towed upward. Both of the front wheel brake 91 and the rear wheel brake 92 interlock and operate.

At this time, when an operation amount of the left brake lever 94 is small, since the front end portion 111b of the arm 111 is urged by the spring 112, the front end portion 111b less easily moves upward. A towing amount of the front interlocking brake cable 97 is smaller than a towing amount of the rear interlocking brake cable 98. When the operation amount of the left brake lever 94 is large, the inner cable 96a of the left brake cable 96 is further towed. Therefore, the rear end portion 111c of the equalizer 102 comes into contact with the restricting section 101a. The equalizer 102 pivots with the rear end portion 111c as a pivoting center. The front end portion 111b ascends resisting an urging force of the spring 112. Therefore, the inner cable 97a of the front interlocking brake cable 97 is towed. In this way, the CBS module 100 adjusts the towing amounts of the front interlocking brake cable 97 and the rear interlocking brake cable 98 and adjusts braking forces of the front wheel brake 91 and the rear wheel brake 92 according to the operation amount of the left brake lever 94.

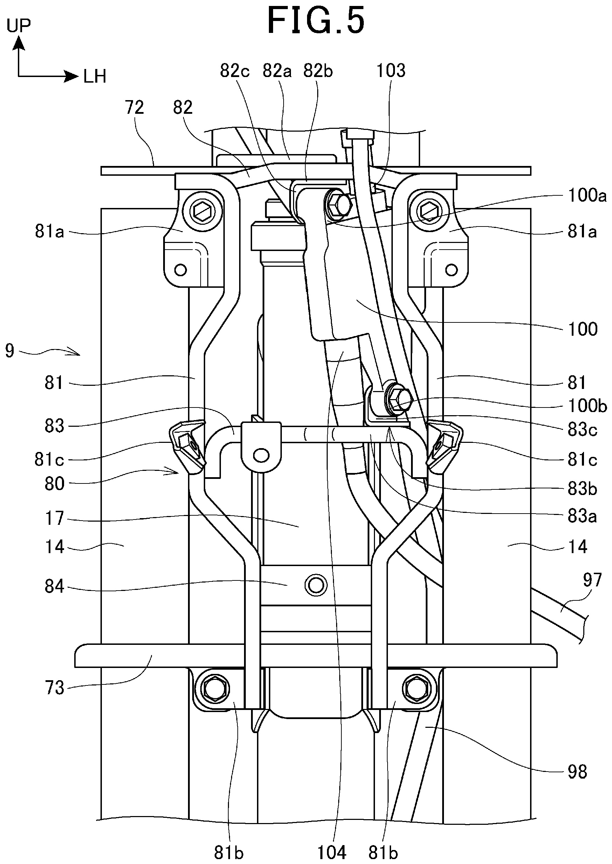

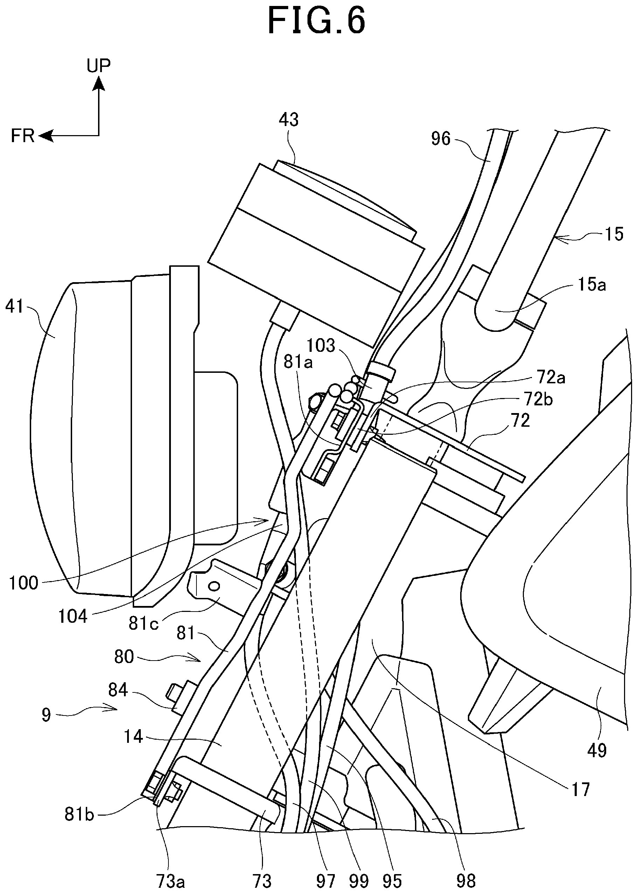

FIGS. 5 and 6 are explanatory diagrams of the CBS module 100 and a stay 80 in the steering system 9. FIG. 5 is a view of the CBS module 100 and the stay 80 viewed from the front side orthogonal to the front forks 14. FIG. 6 is a view of the CBS module 100 and the stay 80 viewed further from the left side than the front forks 14 on the left side. In FIGS. 5 and 6, illustration of the vehicle body cover 16, the inner tubes of the front forks 14, and the like on the front side is omitted.

The CBS module 100 is supported by the top bridge 72 and the bottom bridge 73 via the stay 80.

The stay 80 includes a pair of left and right fixing bars 81 and an upper cross bar 82, a lower cross bar 83, and a cross plate 84 supported between the left and right fixing bars 81.

The left and right fixing bars 81 are bar-like members long in the up-down direction and are formed symmetrically. The left and right fixing bars 81 are respectively disposed along the vehicle width direction inner sides of the left and right front forks 14.

Upper fixing sections 81a are formed at the upper ends of the left and right fixing bars 81. As shown in FIG. 6, the upper fixing sections 81a are fixed to top fixing pieces 72a of the top bridge 72. The top fixing pieces 72a are formed in a plate shape bending downward from the front end edge of the top bridge 72. A pair of the top fixing pieces 72a is formed on the left and the right. The upper fixing sections 81a of the stay 80 are rubber-mounted on the top fixing pieces 72a. Reference sign 72b denotes rubber.

Lower fixing sections 81b are formed at the lower ends of the left and right fixing bars 81. The lower fixing sections 81b are fixed to bottom fixing pieces 73a of the bottom bridge 73. The bottom fixing pieces 73a are formed in a plate shape bending downward from the front end edge of the bottom bridge 73. A pair of the bottom fixing pieces 73a is formed on the left and the right. The lower fixing sections 81b of the stay 80 are ridge-mounted on the bottom fixing pieces 73a.

The stay 80 is fixed to the steering system 9 by the upper fixing sections 81a and the lower fixing sections 81b.

As shown in FIG. 5, the upper cross bar 82 extends to the left and the right along the top bridge 72. A module fixing section 82b having an L shape in section is provided in the left-right direction center of the upper cross bar 82. The module fixing section 82b is fixed to a lower part of the upper cross bar 82. The module fixing section 82b includes a fixing surface 82c further inclining to the left toward the rear. The upper fixing section 100a of the CBS module 100 is bolted to the fixing surface 82c.

The lower cross bar 83 extends in the left-right direction substantially in the center in the up-down direction between the top bridge 72 and the bottom bridge 73. A swelling section 83a bending to swell forward is formed in the left section of the lower cross bar 83. The swelling section 83a is formed to correspond to a position further on the left side (one side in a vehicle width direction) than the head pipe 17. A module fixing section 83b having an L shape in section is supported by the swelling section 83a. The module fixing section 83b includes a fixing surface 83c inclining further to the left toward the rear. The lower fixing section 100b of the CBS module 100 is bolted to the fixing surface 83c.

The CBS module 100 is connected to the stay 80 by the upper fixing section 100a and the lower fixing section 100b. A connecting part of the CBS module 100 and the stay 80 is present below the top bridge 72. Therefore, the heavy objects are disposed in a lower part. A steering function of the steering system 9 is improved. The CBS module 100 is disposed between the two front forks 14. Therefore, theft of the CBS module 100 is easily prevented. Further, in the CBS module 100, the lower fixing section 100b is fixed to the lower cross bar 83 and disposed near an upper part of the head pipe 17. Therefore, it is easy to secure the distance between the lower fixing section 100b and the main frame 18 on the lower side. It is possible to secure a large curvature radius of bending of the rear interlocking brake cable 98 guided along the main frame 18.

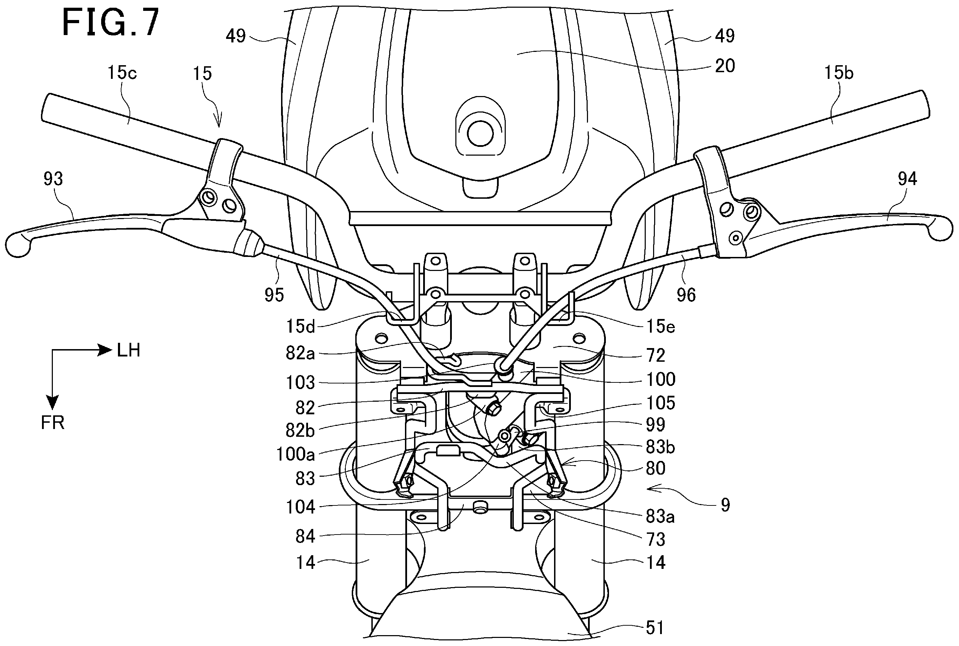

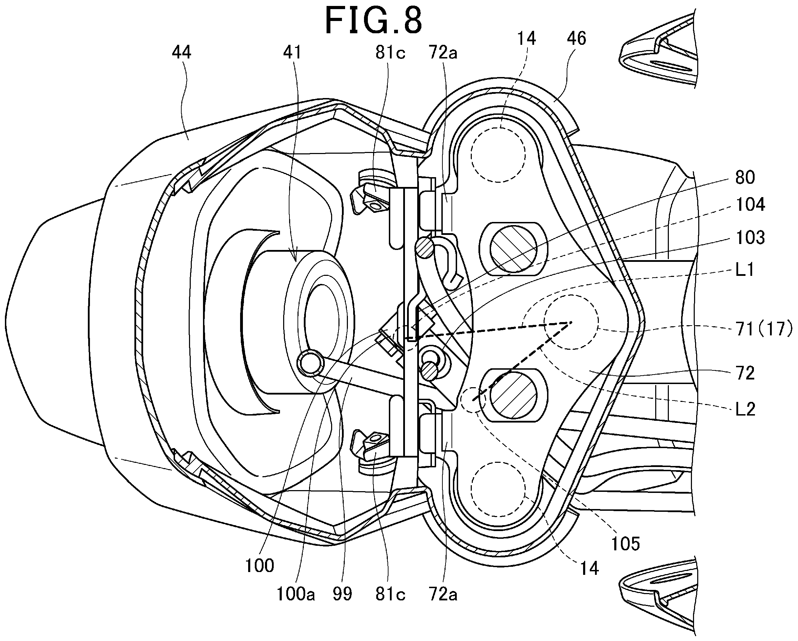

FIG. 7 is a plan view of the main part of the saddled vehicle. FIG. 8 is a VIII-VIII line sectional view of FIG. 1. In FIG. 7, illustration of the vehicle body cover 16, the inner tubes of the front forks 14, and the like on the front side is omitted.

The CBS module 100 is set on the rear side of the swelling section 83a of the lower cross bar 83. The CBS module 100 further inclines to the left side toward the rear. The CBS module 100 is disposed to incline between the two front forks 14 to thereby be set such that, as shown in FIG. 8, a distance L2 between the rear wheel output connecting section 105 and the rotation center of the steering shaft 71 is smaller than a distance L1 between the front wheel output connecting section 104 and the rotation center of the steering shaft 71. Since the rear wheel output connecting section 105 is disposed in a position closer to the head pipe 17 than the front wheel output connecting section 104, the rear wheel output connecting section 105 is close to the rotation center of the steering shaft 71. The rear interlocking brake cable 98 extending from the rear wheel output connecting section 105 has a small rotation radius during the rotation of the steering system 9. It is possible to reduce a position change and reduce the influence of steering.

As shown in FIG. 7, the right brake cable 95, one end of which is connected to the right brake lever 93, is held by a U-shaped cable guide 15d provided on the right side of the handlebar 15 and a U-shaped cable guide 82a provided in the stay 80. The right brake cable 95 is routed toward a space between the head pipe 17 and the CBS module 100. As shown in FIG. 2, the right brake cable 95 passes between the head pipe 17 and the CBS module 100. Then, the right brake cable 95 is drawn around to be rear in the front fork 14 on the left side, held by an annular cable guide 73b provided in the left section of the bottom bridge 73, and routed toward the rear left section of the front fender 51. The right brake cable 95 routed to the front fender 51 is held by an annular cable guide 51a provided in the rear left section of the front fender 51 and routed toward the front wheel brake 91. The other end of the right brake cable 95 is connected to the brake arm 91b of the front wheel brake 91.

The right brake cable 95 is held by the cable guides 15d, 82a, 73b, and 51a provided in the steering system 9. The right brake cable 95 is capable of rotating integrally with the steering system 9. The influence of steering is reduced.

As shown in FIG. 7, the left brake cable 96, one end of which is connected to the left brake lever 94, is held by a U-shaped cable guide 15e provided on the left side of the handlebar 15. The other end of the left brake cable 96 is connected to the input connecting section 103 of the CBS module 100. The input connecting section 103 is located substantially symmetrically with respect to the position of the cable guide 82a on the right side.

As shown in FIG. 6, the front interlocking brake cable 97, one end of which is connected to the front wheel output connecting section 104 of the CBS module 100, extends rearward and downward on the vehicle width direction inner side of the front fork 14 on the left side. As shown in FIG. 2, the front interlocking brake cable 97 is held by the cable guides 73b and 51a. The other end of the front interlocking brake cable 97 is connected to the brake arm 91b of the front wheel brake 91.

The left brake cable 96 and the front interlocking brake cable 97 are held by and connected to the cable guides 15d, 82a, 73b, and 51a provided in the steering system 9 and the CBS module 100 supported by the steering system 9. The left brake cable 96 and the front interlocking brake cable 97 are capable of rotating integrally with the steering system 9. The influence of steering is reduced.

As shown in FIG. 2, the rear interlocking brake cable 98, one end of which is connected to the rear wheel output connecting section 105 of the CBS module 100, is routed to the left side (one side in the vehicle width direction) of the main frame 18.

The CBS module 100, to which one end of the rear interlocking brake cable 98 is connected, is also set on the left side of the head pipe 17. Laying of the rear interlocking brake cable 98 from the CBS module 100 to the main frame 18 is improved.

The rear interlocking brake cable 98 routed to the main frame 18 is held by an annular cable guide 18a on the left side and routed toward the rear wheel brake 92 along the vehicle body frame 12. The other end of the rear interlocking brake cable 98 is connected to the brake arm 92b.

The rear interlocking brake cable 98 is routed across the steering system 9 and the vehicle body frame 12. Therefore, when the steering system 9 pivots, a positional relation with a fixing part on the vehicle body frame 12 side changes. Since the rear wheel output connecting section 105 is close to the axis of the head pipe 17, when the steering system 9 pivots, a rotation radius of the rear wheel output connecting section 105 is small. It is possible to reduce a position change with respect to the vehicle body frame 12. Therefore, it is possible to reduce the influence of steering on the rear interlocking brake cable 98.

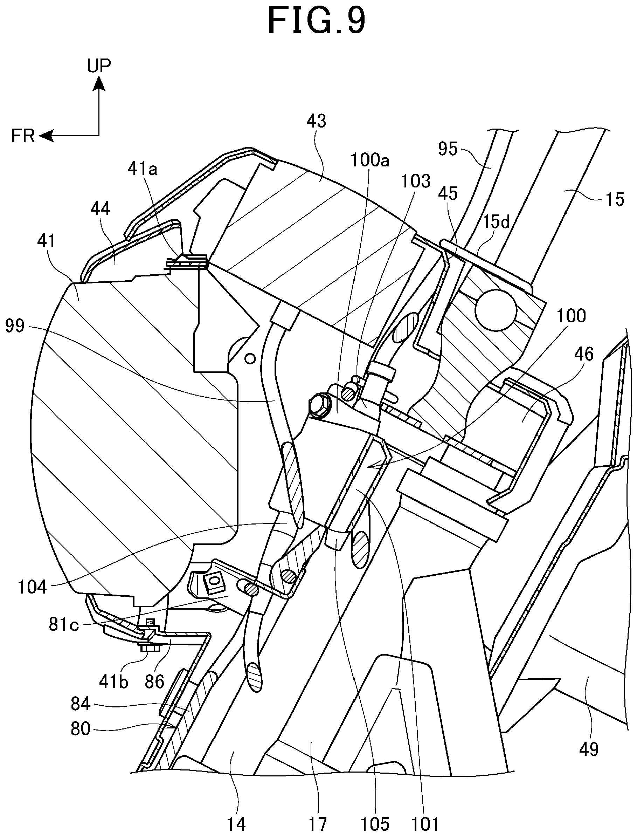

FIG. 9 is a sectional view of the main part of the saddled vehicle 1 and is a sectional view of the right side viewed further from the left side than the head pipe 17.

The headlight 41, the headlight cover 44, and the front cover 46 are supported by the stay 80.

The front cover 46 covers an upper part of the steering system 9. The front cover 46 covers a lower part of the headlight 41 from the front and covers the left and right front forks 14 from the vehicle width direction outer side. A front section 86 of the front cover 46 is fixed to the cross plate 84. The front cover 46 is fixed to fixing sections 81c or the like provided on the left and the right of the stay 80.

The headlight cover 44 is disposed in the front of the front cover 46. The headlight cover 44 covers the outer circumference of the headlight 41. The headlight cover 44 is fixed to an upper part 46a of the front cover 46. The headlight cover 44 is fixed to the fixing section 81c of the stay 80 together with the front cover 46. The headlight cover 44 is fixed to the front section 86 of the front cover 46.

The headlight 41 is supported on the headlight cover 44. The headlight 41 is supported on the headlight cover 44 by an engaging member 41a in an upper part. The headlight 41 is fixed to the front section 86 of the front cover 46 together with the headlight cover 44 by a bolt 41b in a lower part.

As shown in FIGS. 8 and 9, the CBS module 100 is fixed to the stay 80, which supports the headlight 41, to thereby be covered by the headlight cover 44 behind the headlight 41. The CBS module 100 is covered by the front cover 46 and the meter cover 45 as well. Therefore, it is possible to prevent exposure of the CBS module 100 without separately providing a cover for protection that protects the CBS module 100. External appearance is improved. Moreover, the CBS module 100 is disposed between the pair of left and right front forks 14 on the rear side of the swelling section 83a of the stay 80. Antitheft properties are improved.

As shown in FIG. 9, the meter device 43 is disposed behind and above the headlight 41 and above the CBS module 100. The periphery of an upper part of the meter device 43 is covered with the meter cover 45.

The meter device 43 is present above the CBS module 100. Therefore, it is possible to protect the CBS module 100 from above with the meter device 43 and the meter cover 45.

The meter device 43 is a mechanical speed meter. A meter cable 99 is connected to the meter device 43. As shown in FIGS. 2 and 3, the meter cable 99 extends downward from the meter device 43. The meter cable 99 is routed downward through an upper front of the upper cross bar 82 of the stay 80 and the front side of the CBS module 100. The meter cable 99 passes the rear of the lower cross bar 83 and then passes the cable guides 73b and 51a together with the front interlocking brake cable 97. The meter cable 99 is connected to a speed meter gear (not shown in FIGS. 2 and 3) disposed in the front wheel 2.

As explained above, with the saddled vehicle in this embodiment applied with the present invention, in the saddled vehicle 1 including the head pipe 17, the top bridge 72 and the bottom bridge 73 pivotally supported by the head pipe 17 to hold the front forks 14, the headlight 41 connected to the top bridge 72 and the bottom bridge 73 via the stay 80, the headlight cover 44 that covers the rear of the headlight 41, and the CBS module 100 that adjusts braking forces applied to the front wheel 2 rotatably supported by the front forks 14 and the rear wheel 3, the CBS module 100 is connected to the stay 80. Therefore, since the CBS module 100 is covered with the headlight cover 44 behind the headlight 41, it is possible to prevent exposure of the CBS module 100 without separately providing a cover for protection. By providing the CBS module 100 in the steering system 9, it is possible to reduce the influence of steering on the left brake cable 96 connected to the handlebar 15 and the front wheel 2 and the front interlocking brake cable 97.

In this embodiment, the CBS module 100 includes the front wheel output connecting section 104 that applies a braking force to the front wheel 2 and the rear wheel output connecting section 105 that applies a braking force to the rear wheel 3. The rear wheel output connecting section 105 is disposed in a position closer to the head pipe 17 than the front wheel output connecting section 104. Therefore, by disposing the rear wheel output connecting section 105 in a position close to the rotation center of the steering system 9, it is possible to reduce the influence of steering.

In this embodiment, the rear interlocking brake cable 98 extending from the rear wheel output connecting section 105 to the rear wheel 3 is routed to the left side of the main frame 18 extending backward from the head pipe 17. The CBS module 100 is set on the left side with respect to the stay 80. Therefore, laying of the rear interlocking brake cable 98 from the CBS module 100 to the main frame 18 is improved.

In this embodiment, the CBS module 100 is disposed near an upper part of the head pipe 17. Therefore, it is possible to secure a large curvature radius of bending of the rear interlocking brake cable 98 guided along the main frame 18.

In this embodiment, the meter device 43 is provided behind and above the headlight 41 and above the CBS module 100. Therefore, it is possible to protect the CBS module 100 from above.

In this embodiment, the CBS module 100 is disposed between the two front forks 14. Therefore, it is possible to improve antitheft properties concerning the CBS module 100.

The embodiment explained above only indicates a form of the present invention. Modifications and applications of the embodiment are optionally possible without departing from the spirit of the present invention.

For example, in the embodiment, the configuration of the front wheel brake 91, the rear wheel brake 92, and the CBS module 100 including the wire-type cables is explained. However, the configuration of the front wheel brake 91, the rear wheel brake 92, and the CBS module 100 may be a configuration by hydraulic pressure. The configuration including a brake by hydraulic pressure may be adopted only in either one of the front wheel brake 91 and the rear wheel brake 92. Accordingly, the hoses 96 to 98 are not limited to the wire-type cable. A brake hose filled with brake fluid may be used.

The present invention is not limitedly applied to the motorcycle and is applicable to saddled vehicles other than the motorcycle. Note that the saddled vehicles include all vehicles on which riders ride while straddling on vehicle bodies. The saddled vehicles are vehicles including not only the motorcycle (including a motor-assisted bicycle) but also a three-wheel vehicle and a four-wheel vehicle classified into an ATV (an off-road traveling vehicle).

### Reference Signs List

- 2: wheel, front wheel
- 3: rear wheel
- 14: front fork
- 17: head pipe
- 18: main frame
- 41: headlight
- 43: meter device
- 44: headlight cover
- 72, 73: bridge
- 80: stay
- 98: hose
- 100: braking force adjusting device
- 104: front-wheel-side braking force output terminal
- 105: rear-wheel-side braking force output terminal

## Claims

1. A saddled vehicle comprising:
a head pipe (17);
bridges (72, 73) pivotally supported by the head pipe (17) to hold front forks (14);
a headlight (41) connected to the bridges (72, 73) via a stay (80);
a headlight cover (44) that covers a rear of the headlight (41); and
a braking force adjusting device (100) that adjusts a braking force applied to a wheel (2) rotatably supported by the front forks (14), wherein
the braking force adjusting device (100) is connected to the stay (80).

2. The saddled vehicle according to claim 1, wherein the braking force adjusting device (100) includes:
a front-wheel-side braking force output terminal (104) that applies a braking force to a front wheel (2); and
a rear-wheel-side braking force output terminal (105) that applies a braking force to a rear wheel (3), and
the rear-wheel-side braking force output terminal (105) is disposed in a position closer to the head pipe (17) than the front-wheel-side braking force output terminal (104).

3. The saddled vehicle according to claim 2, wherein
a hose (98) extending from the rear-wheel-side braking force output terminal (105) to a rear wheel (3) is routed to one side in a vehicle width direction of a main frame (18) extending backward from the head pipe (17), and
the braking force adjusting device (100) is set on one side in the vehicle width direction with respect to the stay (80).

4. The saddled vehicle according to any one of claims 1 to 3, wherein the braking force adjusting device (100) is disposed near an upper part of the head pipe (17).

5. The saddled vehicle according to any one of claims 1 to 4, wherein the saddled vehicle includes a meter device (43) behind and above the headlight (41) and above the braking force adjusting device (100).

6. The saddled vehicle according to any one of claims 1 to 5, wherein the braking force adjusting device (100) is disposed between a pair of the front forks (14).

## Amended claims

### Amended claims under Art. 19.1 PCT

1. (amended) A saddled vehicle comprising:
a head pipe (17);
bridges (72, 73) pivotally supported by the head pipe (17) to hold front forks (14);
a headlight (41) connected to the bridges (72, 73) via a stay (80);
a headlight cover (44) that covers a rear of the headlight (41); and
a braking force adjusting device (100) that adjusts a braking force applied to a wheel (2) rotatably supported by the front forks (14), wherein
the braking force adjusting device (100) is connected to the stay (80) and is disposed between a pair of the front forks (14).

2. The saddled vehicle according to claim 1, wherein the braking force adjusting device (100) includes:
a front-wheel-side braking force output terminal (104) that applies a braking force to a front wheel (2); and
a rear-wheel-side braking force output terminal (105) that applies a braking force to a rear wheel (3), and
the rear-wheel-side braking force output terminal (105) is disposed in a position closer to the head pipe (17) than the front-wheel-side braking force output terminal (104).

3. The saddled vehicle according to claim 2, wherein
a hose (98) extending from the rear-wheel-side braking force output terminal (105) to a rear wheel (3) is routed to one side in a vehicle width direction of a main frame (18) extending backward from the head pipe (17), and
the braking force adjusting device (100) is set on one side in the vehicle width direction with respect to the stay (80).

4. The saddled vehicle according to any one of claims 1 to 3, wherein the braking force adjusting device (100) is disposed near an upper part of the head pipe (17).

5. The saddled vehicle according to any one of claims 1 to 4, wherein the saddled vehicle includes a meter device (43) behind and above the headlight (41) and above the braking force adjusting device (100).

6. (canceled)
